# EUROPEAN PATENT APPLICATION

(11) **EP 4 187 641 A1**
(43) Date of publication of application: **31.05.2023**
(21) Application number: 21848556.3
(22) Date of filing: 27.07.2021
(51) Int. Cl.: H01M 4/133, H01M 4/1393, H01M 10/0525

(54) **NEGATIVE ELECTRODE SHEET, PREPARATION METHOD THEREFOR, AND LITHIUM ION BATTERY COMPRISING SAME**

(30) Priority: 27.07.2020 CN 202010733533
(71) Applicant: Zhuhai CosMX Battery Co., Ltd., Zhuhai, Guangdong 519180 (CN)
(72) Inventor: JIN, Dandan, Zhuhai, Guangdong 519180 (CN); PENG, Chong, Zhuhai, Guangdong 519180 (CN); LI, Junyi, Zhuhai, Guangdong 519180 (CN); XU, Yanming, Zhuhai, Guangdong 519180 (CN)
(74) Representative: Studio Torta S.p.A.
(86) International application number: PCT/CN2021/108700
(87) International publication number: WO 2022/022520

(57) **Abstract**

The present invention provides a negative electrode piece, a preparation method thereof and a lithium-ion battery including the negative electrode piece. The negative electrode piece includes a negative electrode current collector, a first negative electrode active material layer, a second negative electrode active material layer, and a negative electrode tab, where the negative electrode tab is arranged on a surface of one side of the negative electrode current collector, and a surface of one side of the negative electrode current collector near the negative electrode tab and providing with the negative electrode tab is coated with the first negative electrode active material layer, a surface of one side of the negative electrode current collector away from the negative electrode tab and providing with the negative electrode tab is coated with the second negative electrode active material layer; the first negative electrode active material layer includes a first negative electrode active material, and the second negative electrode active material layer includes a second negative electrode active material. The negative electrode piece of the present invention can effectively improve a phenomenon of lithium precipitation at a position of a tab of a lithium-ion battery with a STP structure, improve a cycle life of the lithium-ion battery; and effectively alleviate a deformation of a battery cell caused by lithium precipitation at the same time.

## Description

The present application claims priority to Chinese Patent Application No. 202010733533.6, titled "Negative Electrode Piece, Preparation Method Thereof and Lithium-ion Battery Including Same", filed to China National Intellectual Property Administration on July 27, 2020, which is hereby incorporated by reference in its entirety.

### TECHNICAL FIELD

The present application relates to technical field of lithium-ion batteries, and in particular, to a negative electrode piece, a preparation method thereof and a lithium-ion battery including the same.

### BACKGROUND

Lithium-ion batteries are widely used in portable electronic devices, such as mobile phones and laptops, due to their high platform voltage, good cycle life, high energy density, no memory effect, and other advantages. With the continuous development of technology, especially an arrival of 5G era, markets demand for battery energy density and charging speed is getting higher and higher, and a conventional coiling structure has been unable to meet customer needs. Some battery manufacturers have developed a special tab process (Special Tab Process, STP) structure with a tab arranged in middle. On the one hand, this structure reduces an area of an empty-for-foil region and improves an energy density; on the other hand, it reduces an impedance of a battery cell and improves a charging speed of the battery cell. However, this structure also has some disadvantages, among which the most prominent one is that it is easy to precipitate lithium on an electrode piece near the tab, especially when charging at a large rate. This will lead to a continuous diffusion of lithium precipitation area of the battery cell during cycling, accelerate a consumption of electrolyte, and eventually lead to deformation and failure of the battery cell, bringing a big hidden danger. A reason for the above lithium precipitation problem is mainly that a current density at a position of the tab in middle is higher than that at other positions during charging.

### SUMMARY

In order to overcome the deficiency of the prior art, the present invention provides a negative electrode piece, a preparation method thereof, and a lithium-ion battery including the negative electrode piece. The negative electrode piece of the present invention can solve the problem of lithium precipitation at a position where a tab is located, in a special battery cell process structure with the tab arranged in middle, that is, a STP structure, thereby improving a cycle life of the battery cell.

In the present invention, the tab is arranged in the middle, which is different tab setting mode from a conventional tab arrangement mode in which the tab is arranged in an empty-for-foil region of head of a negative electrode piece. The special battery cell process structure with the tab arranged in middle refers to that the tab is welded in a middle position of an area coated with a paste on a surface of the negative electrode piece. When welding the tab, a paste on a to-be-welded area is first cleaned to expose a negative electrode current collector, and then the negative electrode tab is welded on a surface of the negative electrode current collector; or during a coating process, no active material is coated on a to-be-welded area of the tab of the current collector.

An object of the present invention is realized by the following technical solution:
a negative electrode piece, including a negative electrode current collector, a first negative electrode active material layer, a second negative electrode active material layer, and a negative electrode tab, where the negative electrode tab is arranged on a surface of one side of the negative electrode current collector, and a surface of one side of the negative electrode current collector near the negative electrode tab and providing with the negative electrode tab is coated with the first negative electrode active material layer, a surface of one side of the negative electrode current collector away from the negative electrode tab and providing with the negative electrode tab is coated with the second negative electrode active material layer; and
the first negative electrode active material layer includes a first negative electrode active material, and the second negative electrode active material layer includes a second negative electrode active material, an intercalation-deintercalation rate of lithium-ions received by the first negative electrode active material layer is greater than an intercalation-deintercalation rate of lithium-ions received by the second negative electrode active material layer.

In the present invention, a dynamic performance of the first negative electrode active material layer is superior to a dynamic performance of the second negative electrode active material layer.

According to the present invention, the dynamic performance refers to the intercalation-deintercalation rate of lithium-ions. The faster the intercalation-deintercalation rate is, the better the dynamic performance is. Main factors affecting the intercalation-deintercalation rate of lithium-ions include: (1) charging current that can be supported by an active material: the larger a charging current that can be supported is, the better the dynamic performance is; and (2) an amount of lithium-ions received per unit time, i.e., a reception speed of lithium-ions: the faster the reception speed of lithium-ions is, the better the dynamic performance is.

Exemplarily, the intercalation-deintercalation rate of lithium-ions of the first negative electrode active material layer is greater than the intercalation-deintercalation rate of the second negative electrode active material layer.

Exemplarily, a supportable charging current of the first negative electrode active material layer is greater than a supportable charging current of the second negative electrode active material layer.

Exemplarily, a lithium precipitation window of the first negative electrode active material layer is larger than a lithium precipitation window of the second negative electrode active material layer.

The lithium precipitation window of the first negative electrode active material layer can be reflected by whether the first negative electrode active material (such as graphite) after dissection precipitates lithium or not. Similarly, the lithium precipitation window of the second negative active material layer can be reflected by whether the second negative electrode active material after dissection precipitates lithium or not. In an embodiment of the present invention, the lithium precipitation window of the first negative electrode active material is greater than or equal to 1.5C. For example, if the lithium precipitation window of the first negative electrode active material is 1.5C, in the case where an existing system of a positive electrode plus the first negative electrode active material plus a diaphragm coated with glue plus an electrolyte is uniformly used to evaluate the lithium precipitation window of the first negative electrode active material, when a battery using the above first negative electrode active material is charged and discharged at 1.5C for 20T (cycle), no lithium is precipitated after dissection, that is, the electrode piece is golden yellow after dissection, and there is no gray lithium precipitation area, in other words, the above first negative electrode active material is a negative electrode active material that supports 1.5C fast charging.

According to the present invention, a length of the first negative electrode active material layer accounts for 1/6-1/3 of a paste of a surface of an entire negative electrode current collector, that is, L_{A}/(L_{A}+L_{B}) = 1/6-1/3, where L_{A} is a length of the first negative electrode active material layer and L_{B} is a length of the second negative electrode active material layer.

According to the present invention, the length of the second negative electrode active material layer accounts for 2/3-5/6 of the paste of the surface of the entire negative electrode current collector, that is, L_{B}/(L_{A}+L_{B}) = 2/3-5/6, where L_{A} is the length of the first negative electrode active material layer and L_{B} is the length of the second negative electrode active material layer.

According to the present invention, surfaces of both sides of the negative electrode current collector near the negative electrode tab are coated with the first negative electrode active material layer, and surfaces of both sides of the negative electrode current collector away from the negative electrode tab are coated with the second negative electrode active material layer.

According to the present invention, lengths of the first negative electrode active material layer on both sides of the negative electrode current collector are the same or different, preferably the same. Exemplarily, the first negative electrode active material layer on both sides of the negative electrode current collector is symmetrically arranged on both sides of the negative electrode current collector with the negative electrode current collector as a symmetrical axis.

According to the present invention, lengths of the second negative electrode active material layer on both sides of the negative electrode current collector are the same or different, preferably the same. Exemplarily, the second negative electrode active material layer on both sides of the negative electrode current collector is symmetrically arranged on both sides of the negative electrode current collector with the negative electrode current collector as a symmetrical axis.

According to the present invention, the negative electrode is a structure with a tab arranged in middle.

According to the present invention, the second negative electrode active material layer is arranged to connect with the first negative electrode active material layer, that is, there is no blank area between the second negative electrode active material layer and the first negative electrode active material layer.

According to the present invention, the length and width of the negative electrode current collector are not specially defined, and the current collectors with different lengths and widths are selected according to different battery cells as needed. Exemplarily, for a battery of 386283 model, the length of the negative electrode current collector is 500-1000 mm, for example 885 ± 2 mm, and the width of the negative electrode current collector is 400-900 mm, for example 773 ± 2 mm.

According to the present invention, the thickness of the first negative electrode active material layer may be same as or different from the thickness of the second negative electrode active material layer, preferably the same, preferably 90-120 µm, for example, 90 µm, 95 µm, 100 µm, 105 µm, 110 µm, 115 µm or 120 µm.

According to the present invention, the surface of the negative electrode current collector also optionally includes a blank area, and the blank area is arranged on one side of the second negative electrode active material layer. For example, the blank area is generated in a production process of the negative electrode piece to avoid cutting the second negative electrode active material layer on the surface of the negative electrode current collector. A length of the blank area can be 0.5-2 mm, for example 1 mm.

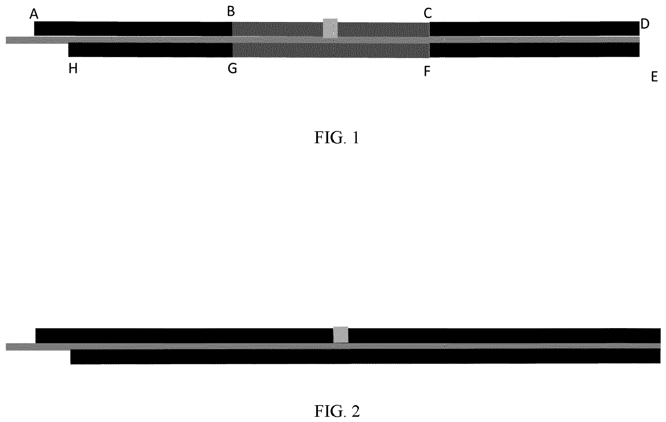

According to the present invention, as shown in FIG. 1, the negative electrode piece includes a negative electrode current collector, a first negative electrode active material layer (section BC and section FG), a second negative electrode active material layer (section AB, section CD, section EF, and section GH), and a negative electrode tab, where the negative electrode tab is arranged on a surface of one side of the negative electrode current collector, and surfaces of both sides of the negative electrode current collector near the negative electrode tab are coated with the first negative electrode active material layer (section BC and section FG), surfaces of both sides of the negative electrode current collector away from the negative electrode tab are coated with the second negative electrode active material layer (section AB, section CD, section EF, and section GH).

According to the present invention, the first negative electrode active material layer includes a first negative electrode active material, a first conductive agent, a first dispersant, and a first binder, and the second negative electrode active material layer includes a second negative electrode active material, a second conductive agent, a second dispersant, and a second binder.

Where, the first negative electrode active material forming the first negative electrode active material layer may be same as or different from the second negative electrode active material forming the second negative electrode active material layer, the first conductive agent may be same as or different from the second conductive agent, the first binder may be same as or different from the second binder, and the first dispersant may be same as or different from the second dispersant.

According to the present invention, a mass percentage content of each component in the first negative electrode active material layer is:
70-98.5 wt% of the first negative electrode active material, 0.5-10 wt% of the first conductive agent, 0.5-10 wt% of the first binder, and 0.5-10 wt% of the first dispersant.

Preferably, the mass percentage content of each component in the first negative electrode active material layer is:
85-97 wt% of the first negative electrode active material, 1-5 wt% of the first conductive agent, 1-5 wt% of the first binder, and 1-5 wt% of the first dispersant.

According to the present invention, a mass percentage content of each component in the second negative electrode active material layer is:
83-99.5 wt% of the second negative electrode active material, 0-2 wt% of the second conductive agent, and 0.5-15 wt% of the second binder.

Preferably, the mass percentage content of each component in the second negative electrode active material layer is:
90-99 wt% of the second negative electrode active material, 0-2 wt% of the second conductive agent, and 1-8 wt% of the second binder.

According to the present invention, a content of the first conductive agent forming the first negative electrode active material layer is greater than a content of the second conductive agent forming the second negative electrode active material layer. Such a selection can ensure that an electronic conductivity of the first negative electrode active material layer is superior to an electronic conductivity of the second negative electrode active material layer. An addition of conductive agent can not only improve the conductivity of the negative electrode active material, but also effectively improve a diffusion ability of Li⁺ in the negative electrode active material. Thus, such a selection can ensure that a dynamic performance of the first negative electrode active material layer is superior to a dynamic performance of the second negative electrode active material layer.

Where, the first conductive agent and the second conductive agent may be same or different, and are each independently selected from at least one of conductive carbon black, acetylene black, ketjen black, conductive graphite, conductive carbon fiber, carbon nanotube, metal powder, carbon fiber and graphene.

According to the present invention, when a content of the first conductive agent forming the first negative electrode active material layer is equal to a content of the second conductive agent forming the second negative electrode active material layer, the first conductive agent is different from the second conductive agent. Exemplarily, the first conductive agent is selected from at least one of graphene and carbon nanotube, and the second conductive agent is selected from at least one of conductive carbon black, acetylene black, ketjen black, conductive graphite, conductive carbon fiber, metal powder, and carbon fiber. Such a selection can ensure that the electronic conductivity of the first negative electrode active material layer is superior to the electronic conductivity of the second negative electrode active material layer, which is mainly because that graphene and carbon nanotube have better electronic conductivity.

Where, the first binder and the second binder may be same or different, and are each independently selected from at least one of sodium carboxymethyl cellulose, styrene-butadiene latex, styrene-acrylic ester emulsion, polytetrafluoroethylene, and polyethylene oxide. Preferably, the first binder is different from the second binder. Exemplarily, the first binder is selected from styrene-acrylic ester emulsion, and the second binder is selected from at least one of sodium carboxymethyl cellulose, styrene-butadiene latex, benzene polytetrafluoroethylene, and polyethylene oxide. Such a selection can ensure that the electronic conductivity of the first negative electrode active material layer is superior to the electronic conductivity of the second negative electrode active material layer, which is mainly because that an electrolyte affinity of styrene-acrylic ester emulsion is better than other binders.

Where, the first negative electrode active material and the second negative electrode active material may be same or different, and are each independently selected from at least one of the following modified or unmodified materials: artificial graphite, natural graphite, mesocarbon microbead, lithium titanate, and silicon oxide, where the modification includes doping, particle size control, or coating. A particle size of the first negative electrode active material is smaller than a particle size of the second negative electrode active material, or a coating amount of the first negative electrode active material is larger than a coating amount of the second negative electrode active material. Small particle size can shorten a transmission path of Li⁺, whereas the increased coating amount may increase an insertion path of Li⁺. These two measures can improve a diffusion ability of Li⁺ in the negative electrode active material layer, thus this selection can ensure that the dynamic performance of the first negative electrode active material layer is superior to the dynamic performance of the second negative electrode active material layer.

Where, the first dispersant and the second dispersant may be same or different, and are each independently selected from at least one of carboxymethyl cellulose and sodium carboxymethyl cellulose.

The present invention also provides a preparation method of the negative electrode piece, which includes the following steps:
1) preparing a slurry forming a first negative electrode active material layer and a slurry forming a second negative electrode active material layer, respectively; and
2) by a coating machine, coating the slurry forming the first negative electrode active material layer on a surface of one side of a negative electrode current collector near a negative electrode tab and providing with the negative electrode tab, and coating the slurry forming the second negative electrode active material layer on a surface of one side of the negative electrode current collector away from the negative electrode tab and providing with the negative electrode tab to obtain the negative electrode piece.

According to the present invention, in step 1), a solid content of the slurry forming the first negative electrode active material layer and a solid content of the slurry forming the second negative electrode active material layer are 40 wt%~45 wt%.

According to the present invention, the step 1) includes the following steps:
Step 1: adding the first negative electrode active material, a first conductive agent, a first binder, and a first dispersant into a mixing tank according to a certain mass ratio, and then adding deionized water to prepare a negative electrode slurry; and
Step 2: adding a second negative electrode active material, a second conductive agent, a second binder, and a second dispersant into a mixing tank according to a certain mass ratio, and then adding deionized water to prepare a negative electrode slurry.

According to the present invention, the step 2) includes the following steps:
coating the slurry forming the first negative electrode active material layer on the surface of one side of the negative electrode current collector near the negative electrode tab and providing with the negative electrode tab, to form the first negative electrode active material layer; and
coating the slurry forming the second negative electrode active material layer on the surface of one side of the negative electrode current collector away from the negative electrode tab and providing with the negative electrode tab, to form the second negative electrode active material layer.

According to the present invention, the step 2) includes the following steps:
coating the slurry forming the first negative electrode active material layer on surfaces of both sides of the negative electrode current collector near the negative electrode tab, to form the first negative electrode active material layer; and
coating the slurry forming the second negative electrode active material layer on surfaces of both sides of the negative electrode current collector away from the negative electrode tab, to form the second negative electrode active material layer.

According to the present invention, the step 2) includes the following steps:
on the surface of one side of the negative electrode current collector provided with the negative electrode tab, coating the slurry forming the first negative electrode active material layer on section BC of the surface of the negative electrode current collector, to form the first negative electrode active material layer; and coating the slurry forming the second negative electrode active material layer on section AB and section CD of the surface of the negative electrode current collector, to form the second negative electrode active material layer, where section BC is skipped when coating; and
optionally, on the surface of the other side opposite to the one side provided with the negative electrode tab, coating the slurry forming the first negative electrode active material layer on section FG of the surface of the negative electrode current collector, to form the first negative electrode active material layer; and coating the slurry forming the second negative electrode active material layer on section EF and section GH of the surface of the negative electrode current collector, to form the second negative electrode active material layer, where section FG is skipped when coating.

According to the present invention, the method further includes the following step:
3) drying a prepared negative electrode piece at 100 °C, pressing by a roller, cutting into strips, cleaning a tab groove with laser, and welding a nickel tab to obtain the negative electrode piece.

According to the present invention, the step 3) includes the following step:
drying a prepared negative electrode piece at 100 °C, pressing by a roller, cutting into strips, laser cleaning a tab groove on an area where the first negative electrode active material layer is located, and welding a nickel tab to obtain the negative electrode piece.

The present invention also provides a lithium-ion battery, and the lithium-ion battery includes the above negative electrode piece.

According to the present invention, the battery further includes a positive electrode piece and a diaphragm.

According to the present invention, a capacity retention rate of the lithium-ion battery after 1000 cycles under a charging and discharging system of 3C/1C at 25 °C is ≥ 82%.

According to the present application, an expansion rate of a battery cell after 100 cycles under a charging and discharging system of 3C/1C at 25 °C is ≤ 12%

The beneficial effects of the present invention:
the present invention provides a negative electrode piece, a preparation method thereof and a lithium-ion battery including the negative electrode piece; the negative electrode piece of the present invention can effectively improve a phenomenon of lithium precipitation at a position of a tab of a lithium-ion battery with a STP structure, improve a cycle life of the lithium-ion battery; and meanwhile effectively alleviate a deformation of the battery cell caused by lithium precipitation.

### BRIEF DESCRIPTION OF DRAWINGS

FIG. 1 is a structure diagram of a negative electrode piece of the present invention.
FIG. 2 is a structure diagram of an existing negative electrode piece.

### DESCRIPTION OF EMBODIMENTS

The present invention will be further described in detail below in combination with specific examples. It should be understood that the following examples are only illustrative and explanatory of the present invention, and should not be interpreted as a limitation on the protection scope of the present invention. All technologies realized based on the above contents of the present invention are covered in the protection scope of the present invention.

Unless otherwise specified, the experimental methods used in the following examples are conventional methods; reagents, materials, etc. used in the following examples can be obtained from commercial sources unless otherwise specified.

The artificial graphite A used in the following examples is spherical graphite coated with hard carbon, and its particle size is D₁₀=8.0 µm, D₅₀=15.2 µm, D₉₀=29.3 µm, where, a method for coating is liquid phase coating.

The artificial graphite B used in the following examples is uncoated and undoped spherical graphite, and its particle size is D₁₀=8.2 µm, D₅₀=15.8 µm, D₉₀=28.8 µm.

The artificial graphite C used in the following examples is uncoated and undoped spherical graphite, and its particle size is D₁₀=6.1 µm, D₅₀=13.9 µm, D₉₀=22.7 µm.

Where, the particle size of artificial graphite A is equivalent to the particle size of artificial graphite B, and the difference is only that there is a coating layer structure on a surface of artificial graphite, thus a dynamic performance of artificial graphite A is superior to a dynamic performance of artificial graphite B; the particle size of artificial graphite C is smaller than the particle size of artificial graphite B, thus a dynamic performance of artificial graphite C is superior to a dynamic performance of artificial graphite B.

In the description of the present invention, it should be noted that the terms "first", "second" and the like are only used for description purposes, rather than indicating or implying relative importance.

Example 1. A preparation method of a negative electrode piece and a preparation method of a lithium-ion battery including the negative electrode piece are as follows:
Step 1: prepare a first active material slurry: adding a first negative electrode active material (artificial graphite B), a first conductive agent (conductive carbon black), a first binder (styrene-butadiene latex), and a first dispersant (carboxymethyl cellulose) into a mixing tank in a mass ratio of 96.4:1:1.3:1.4, and then adding deionized water to prepare a negative electrode slurry, and stirring through a well-known mixing process to obtain a slurry with a solid content of 40%-45%;
Step 2: prepare a second active material slurry: adding a second negative electrode active material (artificial graphite B), a second binder (styrene-butadiene latex), and a second dispersant (carboxymethyl cellulose) into a mixing tank in a mass ratio of 97.4:1.3:1.4, then adding deionized water to prepare a negative electrode slurry, and stirring through a well-known mixing process to obtain a slurry with a solid content of 40%-45%;
Step 3: prepare a negative electrode piece: coating twice using a skip coating machine, to coat the two active material slurries on a copper foil as a negative electrode current collector. As shown in FIG. 1, a surface of one side of the negative electrode piece: it can be coated starting from either end, A end or D end, the second active material slurry is coated on section AB and section CD through a first skip coating, and section BC is skipped during coating; the first active material slurry is coated on section BC through a second skip coating; thicknesses of the coating layers on surfaces of the three coated sections are the same. A surface of the other side of the negative electrode piece: it can be coated starting from either end, E end or H end, the second active material slurry is coated on section EF and section GH through a first skip coating, section FG is skipped during coating; the first active material slurry is coated on section FG through a second skip coating; the thicknesses of the coating layers on surfaces of the three coated sections are the same,
the prepared negative electrode piece is dried at 100 °C, pressed by a roller, cut into strips, cleaned out a tab groove with laser, and welded a nickel tab to obtain the negative electrode piece; and
Step 4: preparate a positive electrode piece: adding lithium cobaltate as a main material of a positive electrode, a conductive agent and polyvinylidene fluoride into a mixing tank in a mass ratio of 97:1.5:1.5, then adding NMP solvent to prepare a positive electrode slurry with a solid content of 70%~75%, then coating the slurry on an aluminum foil using a coating machine, drying at 120 °C for 8h, cutting into small strips after drying, cleaning with a scraper to clean a welding position of a positive electrode tab, then, pressing by a roller, and welding an aluminum tab to obtain the positive electrode piece; and
Step 5: assemble a battery cell: coiling the positive electrode piece and the negative electrode piece obtained in the above two steps together with a diaphragm to form a coiled core, packing with an aluminum plastic film, baking to remove moisture, injecting an electrolyte, and then formatting using a hot-pressing process to form a battery cell.

### Example 2

The procedure is the same as Example 1, except that:
Step 1: prepare a first active material slurry: adding a first negative electrode active material (artificial graphite A), a first conductive agent (conductive carbon black), a first binder (styrene-butadiene latex), and a first dispersant (carboxymethyl cellulose) into a mixing tank in a mass ratio of 96.4:1:1.3:1.4, and then adding deionized water to prepare a negative electrode slurry, stirring through a well-known mixing process to obtain a slurry with a solid content of 40%-45%; and
Step 2: prepare a second active material slurry: adding a second negative electrode active material (artificial graphite B), a second conductive agent (conductive carbon black), a second binder (styrene-butadiene latex), and a second dispersant (carboxymethyl cellulose) into a mixing tank in a mass ratio of 96.4:1:1.3:1.4, and then adding deionized water to prepare a negative electrode slurry, and stirring through a well-known mixing process to obtain a slurry with a solid content of 40%~45%.

### Example 3

The procedure is the same as Example 1, except that:
Step 1: prepare a first active material slurry: adding a first negative electrode active material (artificial graphite C), a first conductive agent (conductive carbon black), a first binder (styrene-butadiene latex), and a first dispersant (carboxymethyl cellulose) into a mixing tank in a mass ratio of 96.4:1:1.3:1.4, and then adding deionized water to prepare a negative electrode slurry, stirring through a well-known mixing process to obtain a slurry with a solid content of 40%-45%; and
Step 2: prepare a second active material slurry: adding a second negative electrode active material (artificial graphite B), a second conductive agent (conductive carbon black), a second binder (styrene-butadiene latex), and a second dispersant (carboxymethyl cellulose) into a mixing tank in a mass ratio of 96.4:1:1.3:1.4, and then adding deionized water to prepare a negative electrode slurry, and stirring through a well-known mixing process to obtain a slurry with a solid content of 40%~45%.

### Example 4

The procedure is the same as Example 1, except that:
Step 1: prepare a first active material slurry: adding a first negative electrode active material (artificial graphite B), a first conductive agent (conductive carbon black), a first binder (styrene-acrylic ester emulsion), and a first dispersant (carboxymethyl cellulose) into a mixing tank in a mass ratio of 96.4:1:1.3:1.4, then adding deionized water to prepare a negative electrode slurry, stirring through a well-known mixing process to obtain a slurry with a solid content of 40%-45%; and
Step 2: prepare a second active material slurry: adding a second negative electrode active material (artificial graphite B), a second conductive agent (conductive carbon black), a second binder (styrene-butadiene latex), and a second dispersant (carboxymethyl cellulose) into a mixing tank in a mass ratio of 96.4:1:1.3:1.4, and then adding deionized water to prepare a negative electrode slurry, and stirring through a well-known mixing process to obtain a slurry with a solid content of 40%~45%.

### Example 5

The procedure is the same as Example 1, except that:
Step 1: prepare a first active material slurry: adding a first negative electrode active material (artificial graphite B), a first conductive agent (carbon nanotube, a first binder (styrene-butadiene latex), and the first dispersant (carboxymethyl cellulose) into a mixing tank in a mass ratio of 96.4:1:1.3:1.4, and then adding deionized water to prepare a negative electrode slurry, stirring through a well-known mixing process to obtain a slurry with a solid content of 40%-45%; and
Step 2: prepare a second active material slurry: adding a second negative electrode active material (artificial graphite B), a second conductive agent (conductive carbon black), a second binder (styrene-butadiene latex), and a second dispersant (carboxymethyl cellulose) into a mixing tank in a mass ratio of 96.4:1:1.3:1.4, and then adding deionized water to prepare a negative electrode slurry, and stirring through a well-known mixing process to obtain a slurry with a solid content of 40%~45%.

### Comparative Example 1

The procedure is the same as Example 1, except that the first step to the third step is replaced by the following first step:
Step 1: prepare an active material slurry: adding a negative electrode active material (artificial graphite A), a conductive agent (conductive carbon black), a binder (styrene-butadiene latex), and a dispersant (carboxymethyl cellulose) into a mixing tank in a mass ratio of 96.4:1:1.3:1.4, and then adding deionized water to prepare a negative electrode slurry with a solid content 40%~45%, and then coating the slurry on a copper foil using a coating machine, with a coating structure as shown in FIG. 2, drying at 100 °C, pressing by a roller, cutting into strips, cleaning out a tab groove with laser, welding a nickel tab to obtain a negative electrode piece.

### Comparative Example 2

The procedure is the same as Example 1, except that the first step to the third step is replaced by the following first step:
Step 1: prepare an active material slurry: adding a negative electrode active material (artificial graphite B), a conductive agent (conductive carbon black), a binder (styrene-butadiene latex), a dispersant (carboxymethyl cellulose) into a mixing tank in a mass ratio of 96.4:1:1.3:1.4, and then adding deionized water to prepare a negative electrode slurry with a solid content of 40%~45%, and then coating the slurry on a copper foil using a coating machine, with a coating structure as shown in FIG. 2, drying at 100 °C, pressing by a roller, cutting into strips, cleaning out a tab groove with laser, welding a nickel tab to obtain a negative electrode piece.

### Comparative Example 3

The procedure is the same as Example 1, except that:
Step 3: prepare a negative electrode piece: coating twice using a skip coating machine, to coat the two active material slurries on a copper foil as a negative electrode current collector. As shown in FIG. 1, a surface of one side of the negative electrode piece: it can be coated starting from either end, A end or D end, the first active material slurry is coated on section AB and section CD through a first skip coating, and section BC is skipped during coating, and the second active material slurry is coated on section BC through a second skip coating; thicknesses of the coating layers on surfaces of the three coated sections are the same. A surface on the other side of the negative electrode piece: it can be coated starting from either end, E end or H end, the first active material slurry is coated on section EF and section GH through a first skip coating, and section FG is skipped during coating, the second active material slurry is coated on section FG through a second skip coating; thicknesses of the coating layers on surfaces of the three coating sections are the same.

The electrode pieces prepared in each Example and Comparative Example are assembled into a soft packed battery cell of 386283 Model, and a 0.2C/0.2C charge-discharge is conducted at 25 °C to test a capacity of the battery cell, an energy density of the battery is calculated according to capacity × voltage/thickness/width/height, and a 3C/1C cycle performance is tested at 25 °C. Batteries after different cycles are disassembled to confirm a lithium precipitation condition at a position of a tab of the battery, the disassembly results and energy density are listed in Table 1.

**Table 1. Comparation data of energy density and lithium precipitation condition at position of tab, capacity retention rate and expansion rate of thickness of battery cell during cycle process of each Example and Comparative Example**

| No. | Energy density/ Wh/L | Lithium precipitation condition of tab after 20T | Lithium precipitation condition of tab after 300T | Lithium precipitation condition of tab after SOOT | Lithium precipitation condition of tab after 1000T | Capacity retention rate at 1000T | Expansion rate of thickness of battery cell after 1000T |
|---|---|---|---|---|---|---|---|
| Example 1 | 690 | No lithium precipitation | No lithium precipitation | No lithium precipitation | No lithium precipitation | 83.12% | 9.42% |
| Example 2 | 685 | No lithium precipitation | No lithium precipitation | No lithium precipitation | No lithium precipitation | 86.52% | 9.33% |
| Example 3 | 687 | No lithium precipitation | No lithium precipitation | No lithium precipitation | No lithium precipitation | 84.22% | 9.53% |
| Example 4 | 690 | No lithium precipitation | No lithium precipitation | No lithium precipitation | No lithium precipitation | 82.12% | 11.23% |
| Example 5 | 690 | No lithium precipitation | No lithium precipitation | No lithium precipitation | No lithium precipitation | 81.15% | 10.34% |
| Comparative Example 1 | 670 | No lithium precipitation | No lithium precipitation | Mild lithium precipitation | Lithium precipitation | 78.23% | 13.63% |
| Comparative example 2 | 690 | No lithium precipitation | Mild lithium precipitation | Lithium precipitation | Serious lithium precipitation | 74.85% | 15.33% |
| Comparative example 3 | 687 | Mild lithium precipitation | Lithium precipitation | Lithium precipitation | Serious lithium precipitation | 70.85% | 18.25% |

It can be seen from Table 1 that the battery cell prepared by the method of the present invention can significantly improve the lithium precipitation condition at the tab of the battery cell, significantly improve the deformation and expansion of the battery cell caused by lithium precipitation, and improve the cycle life of the battery cell.

The embodiments of the present invention have been described above. However, the present invention is not limited to the above embodiments. Any modification, equivalent replacement, improvement, etc. made within the spirit and principle of the present invention shall be included in the protection scope of the present invention.

## Claims

1. A negative electrode piece, wherein the negative electrode piece comprises a negative electrode current collector, a first negative electrode active material layer, a second negative electrode active material layer, and a negative electrode tab, wherein the negative electrode tab is arranged on a surface of one side of the negative electrode current collector, and a surface of one side of the negative electrode current collector near the negative electrode tab and providing with the negative electrode tab is coated with the first negative electrode active material layer, a surface of one side of the negative electrode current collector away from the negative electrode tab and providing with the negative electrode tab is coated with the second negative electrode active material layer;
the first negative electrode active material layer comprises a first negative electrode active material, and the second negative electrode active material layer comprises a second negative electrode active material, an intercalation-deintercalation rate of lithium-ions received by the first negative electrode active material layer is greater than an intercalation-deintercalation rate of lithium-ions received by the second negative electrode active material layer.

2. The negative electrode piece according to claim 1, wherein L_{A}/(L_{A}+L_{B}) = 1/6-1/3; wherein, L_{A} is a length of the first negative electrode active material layer, and L_{B} is a length of the second negative electrode active material layer.

3. The negative electrode piece according to claim 1 or 2, wherein L_{B}/(L_{A}+L_{B}) = 2/3-5/6; wherein, L_{A} is a length of the first negative electrode active material layer, and L_{B} is a length of the second electrode negative electrode active material layer.

4. The negative electrode piece according to any one of claims 1-3, wherein the intercalation-deintercalation rate of lithium-ions in the first negative electrode active material layer is greater than the intercalation-deintercalation rate of lithium-ions in the second negative electrode active material layer; and/or
a supportable charging current of the first negative electrode active material layer is greater than a supportable charging current of the second negative electrode active material layer; and/or
a lithium precipitation window of the first negative electrode active material layer is larger than a lithium precipitation window of the second negative electrode active material layer.

5. The negative electrode piece according to any one of claims 1-4, wherein the first negative electrode active material layer comprises a first negative electrode active material, a first conductive agent, a first dispersant, and a first binder, and the second negative electrode active material layer comprises a second negative electrode active material, a second conductive agent, a second dispersant, and a second binder.

6. The negative electrode piece according to any one of claims 1-5, wherein mass percent contents of components in the first negative electrode active material layer are:
70-98.5 wt% of the first negative electrode active material, 0.5-10 wt% of the first conductive agent, 0.5-10 wt% of the first binder, and 0.5-10 wt% of the first dispersant;
mass percentage contents of components in the second negative electrode active material layer are:
83-99.5 wt% of the second negative electrode active material, 0-2 wt% of the second conductive agent, and 0.5-15 wt% of the second binder.

7. The negative electrode piece according to any one of claims 1-6, wherein surfaces of both sides of the negative electrode current collector near the negative electrode tab are coated with the first negative electrode active material layer, and surfaces of both sides of the negative electrode current collector away from the negative electrode tab are coated with the second electrode negative electrode active material layer.

8. The negative electrode piece according to any one of claims 1-7, wherein a content of the first conductive agent for forming the first negative electrode active material layer is greater than a content of the second conductive agent for forming the second negative electrode active material layer; and/or
the first conductive agent is selected from at least one of graphene and carbon nanotube, and the second conductive agent is selected from at least one of conductive carbon black, acetylene black, ketjen black, conductive graphite, conductive carbon fiber, metal powder, and carbon fiber; and/or
the first binder is selected from styrene-acrylic ester emulsion; and/or
the second binder is selected from at least one of sodium carboxymethyl cellulose, styrene-butadiene latex, benzene polytetrafluoroethylene and polyethylene oxide; and/or
a particle size of the first negative electrode active material is smaller than a particle size of the second electrode negative electrode active material; and/or
a coating amount of the first negative electrode active material is greater than a coating amount of the second negative electrode active material.

9. The negative electrode piece according to any one of claims 1-8, wherein a negative electrode is a structure with a tab arranged in middle.

10. A lithium-ion battery, comprising the negative electrode piece according to any one of claims 1-9.
